# EUROPEAN PATENT SPECIFICATION

(11) **EP 2 768 318 B1**
(45) Date of publication and mention of the grant of the patent: **23.09.2015**
(21) Application number: 12806667.7
(22) Date of filing: 22.10.2012
(51) Int. Cl.: A23L 1/16, A23L 1/164, A23L 1/30, A21D 13/06

(54) **METHOD AND RELATIVE PLANT FOR THE PREPARATION OF SOLID FOOD PRODUCTS; IN PARTICULAR SNACKS OR PASTA**
VERFAHREN UND ANLAGE ZUR HERSTELLUNG VON FESTEN NAHRUNGSMITTELPRODUKTEN; INSBESONDERE SNACKS ODER TEIGWAREN
PROCÉDÉ ET PLANTE ASSOCIÉE POUR LA PRÉPARATION DE PRODUITS ALIMENTAIRES SOLIDES ; EN PARTICULIER DES AMUSE-GUEULE OU DES PÂTES

(30) Priority: 21.10.2011 IT BO20110595
(43) Date of publication of application: 27.08.2014
(73) Proprietor: Life Snack S.r.l., Redondesco (IT)
(72) Inventor: GOLLINI, Dino, I-46010 Redondesco (IT)
(74) Representative: Boggio, Luigi
(86) International application number: PCT/IB2012/055807
(87) International publication number: WO 2013/057727

(56) References cited:
- WO-A2-2008/024907
- WO-A2-2011/002802
- JP-A- 2004 041 155
- US-A1- 2009 155 447

## Description

### TECHNICAL FIELD

The present invention relates to a method, and the relative plant, for the preparation of solid food products, in particular snacks or pasta.

In particular, the present invention finds advantageous, but not exclusive application in the preparation of salted or sweetened snacks, to which the description that follows will make explicit reference without thereby losing generality.

### BACKGROUND ART

As known, the quality of ingested lipids, but even more the composition of said lipids, are fundamental factors for a healthy and balanced nutrition for humans.

It is known that animal originating products contribute to more than half of the daily requirement of fat for humans.

For this reason, even more often institutes that deal with nutrition accuse solid food products such as snacks, to be too rich in saturated fat and/or salt, and put consumer health at risk.

In addition, the scientific world is fully aware of the issues relating to the constant imbalance between excessive content of Omega 6 and a low content of Omega 3.

It is also known that the fatty acids Omega 3 and Omega 6 are precursors of very active biological compounds in the organism. They are, in fact, the cellular mediators that regulate the major functions of the body as, for example, immune mechanisms, lipemia, glycemia etc..; an imbalance thereof is considered, therefore, critical and one of the most important causes of disease for many people.

In particular Omega 3 fatty acids are acids that belong to the family of polyunsaturated fatty acids; the presence within our diet of Omega 3 fatty acids is of fundamental importance because our body is unable to synthesize them.

Their main function for our well-being is to promote optimal functioning of the cardiovascular system. In this regard, to better set the importance of snacks in the common daily diet in continental Europe it is estimated that an average of more than 3Kg/year per person is consumed, while in England the per capita consumption is almost double.

Starting from these premises by means of the present invention it is intended not so much to improve the nutritional properties of the snacks, as to transform from insignificant detrimental food to health-giving nutritious food useful for the organism.

Currently for the preparation of snacks sunflower oil or oil of various seeds is used.

According to this logic by way of the present invention it has been sought to develop a line for the production of solid food products such as snacks, with high content of omega 3 acids, oven baked (not fried), a line that does not use compounds as:
- Preservatives;
- artificial colouring;
- Monosodium Glutamate.

This line, however, uses ingredients such as:
- Iodized salt;
and above all, to be precise:
- Omega 3 bearing oils.

These oils may be either of vegetable origin or of animal origin.

The use of vegetable oils bearers of Omega 3 is, in fact, one of the distinguishing features of this new product line.

The products that are made using the plant object of the present invention and the relative method preserve the nutritional complement common to traditional snacks thanks to their high content of fibers, phosphorus, magnesium and vegetable proteins.

For the production of said solid food product raw materials were combined so as to have a high quality product, totally satisfactory from the point of view of taste and smell, such as those already on the market but with a much greater level in terms of the nutritional quality.

WO 2008024907 discloses a food bar comprising omega-3 fatty acids.

Note that the simple addition of a considerable quantity of Omega 3 to the solid food product, without having first meticulously studied a new method of manufacturing the same, would have had the effect of obtaining a final product with a strong fishy taste not acceptable to most consumers.

In fact, according to the present invention the technical problem of having a high quality product (with high fiber content, phosphorus, magnesium and vegetable proteins) is solved, but having a considerable Omega 3 content without compromising the taste of the solid food product and having no fishy flavour whatsoever.

### DISCLOSURE OF INVENTION

Therefore, the main object of the present invention is to provide a method for the preparation of a very nutritious solid food product, with a very high content of omega 3, but which has a pleasant taste.

Further object of the present invention is to provide a plant adapted to implement the above method.

Another object of the present invention is to provide a solid food product, for example a snack or pasta, having a high content of omega 3.

According to the present invention are therefore implemented a method, a relative plant and a relative solid food product, as claimed in the independent claims or any of claims depending directly or indirectly by the independent claims.

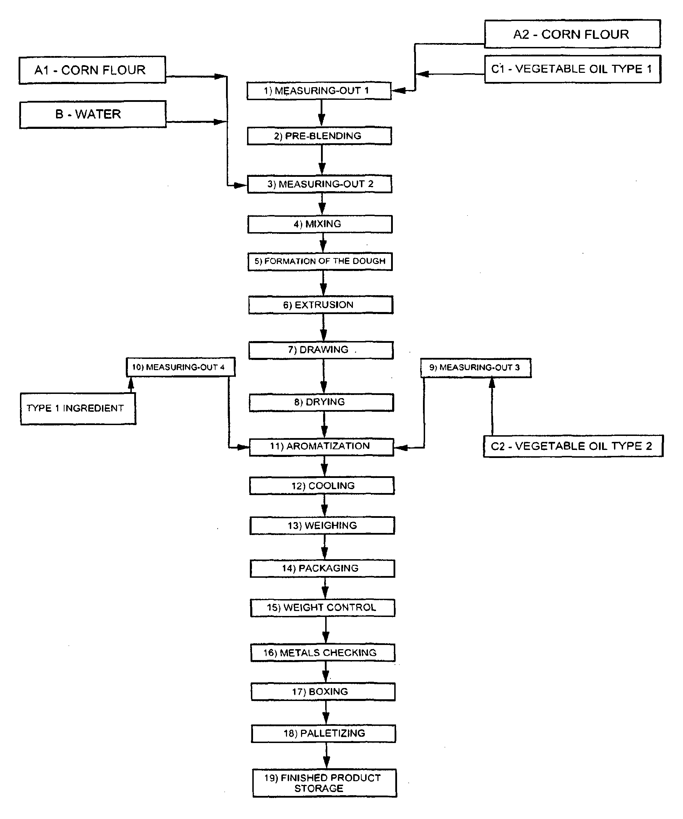

### BRIEF DESCRIPTION OF THE DRAWING

For a better understanding of the present invention, with reference to the block diagram shown in the single figure attached, a preferred embodiment of the method main object of the present invention will now be described.

### BEST MODE FOR CARRYING OUT THE INVENTION

In general, the production cycle of corn or vegetable flours extruded with added Omega 3 can be divided into the following steps shown in the single attached Figure:
1. Measuring-out 1
2. Pre-blending
3. Measuring-out 2
4. Mixing
5. Formation of dough
6. Extrusion
7. Drawing
8. Drying
9. Measuring-out 3
10. Measuring-out 4
11. Aromatization
12. Cooling
13. Weighing
14. Packaging
15. Weight control
16. Checking presence of metals
17. Boxing
18. Palletizing
19. Storage of finished product.

The steps of the process object of the invention will now be described individually:

### 1. MEASURING-OUT 1

In this step the correct quantities of flour and oil (type 1) are prepared. The latter is the bearer of important Omega 3 fatty acids. In this step vegetable oil (type 1), for example, linseed oil can be used in an advantageous way.

Merely by way of example it was found that good results could be obtained when for about 100 kg of corn flour a quantity of vegetable oil, particularly linseed oil, ranging from 1% to 9% of the flour weight is used.

### 2. PRE-BLENDING

In this step the two above-mentioned components are mixed.

### 3. MEASURING-OUT 2

At this step in a first moment to a certain quantity of corn flour potable water is added in a quantity ranging from 2 to 5% of the corn quantity; the mixture is then combined with the predefined quantity obtained from the pre-blending made in the above step 2.

In brief, we can say that the pre-blending obtained in step (2) is one of the three components, together with a certain quantity of water and an addition of corn flour, which constitute the final dough.

Preferably, but not necessarily, the flour used for the production of the final dough is the same as that used as an ingredient for the formation of the pre-blending.

### 4. MIXING

At this step the corn flour, the water and the pre-blending product are blended together in a mixer; in this step, each corn grain is in contact in a uniform way and with the correct quantity of water and vegetable oil (type 1).

### 5. FORMATION OF DOUGH

In this step the three elements blend into a homogeneous mixture creating biochemical reactions that make this process irreversible; the dough thus obtained is transferred by means of a screw feeder inside an extruder.

### 6. EXTRUSION

The technological process of corn snacks is characterized by the extrusion step from which are named this kind of products specifically "corn extruded product".

The method envisages, essentially, the compression of the food to obtain a semi-solid mass and its subsequent passage through a small opening to vary its consistency, shape and color; during the passage of the dough into the extruder, and due to the high pressures and the heating, the gelling of the starch content in corn flour takes place, with a consequent swelling of the dough itself.

Incidentally in the present method two types of extrusion can essentially be used:
a) extrusion by way of twin-screw cylinder compression for obtaining corn balls, rings and croissants; or
b) extrusion by way of plate friction operated by rotatable discs for obtaining the so-called "corn shavings".

During the extrusion step the heating and pressing inflicted upon the dough cause the elimination of the typical smell of linseed oil; an unpleasant odour for the user. It seems clear that the temperature at this step must also be adjusted as a function of the percentage of linseed oil added and of the quantity of Omega 3 present in linseed oil.

### 7. DRAWING

The extruded product obtained in the preceding step is pushed through a die that gives shape to the product (balls, croissants and rings) and subsequently cut by one or more rotary knife blades; setting the speed of the knife confers the desired length to the snack.

In the case of the above "corn shavings" to the extrusion step does not follow that of drawing, but is the extrusion itself that directly determines the irregular shape of the product.

At the end of the drawing process the fresh snack has obtained the desired characteristic shape and is transported to the dryer through a pneumatic conveyor.

With the extrusion step the irreversible passage phenomenon of the three distinct main components takes place, i.e., pre-blend, corn flour and water, in a fluid, homogeneous, shapeless agglomeration which constitutes the extrudate, where it is no longer possible separate the three original components. To this boiling (by pressure) and shapeless mass before coming in contact with the air, and therefore expanding, the die confers a shape (so to each type of final product corresponds a different extruder) and with the subsequent cutting step is attributed a dimension to the shape assumed during the drawing step. In conclusion, the extruded mass is given a shape by drawing.

### 8. DRYING

The drying process lasts 15 to 20 minutes depending on the size of snacks to bake.

The oven adapted to perform the drying step comprises an outer chamber in stainless steel with insulated walls.

On the upper part the loading of the fresh product takes place coming from the extruder through a pneumatic conveyor tube which deposits the snack onto the first conveyor belt.

Inside the oven three drying stainless steel belts are positioned on which the fresh product to be dried is transported. The heated air is forcibly pushed through a specific pipe through the three drier belts, which, since they are made of a stainless steel net, allow a perfect diffusion of the same heated air through the product drying it in a homogeneous way.

The main purpose of this process step is to reduce the product moisture to values lower than 8% of moisture in order to make the snack preservable for at least six months.

The dried product is then conveyed to the outside by way of a separate stainless steel hopper and by way of a belt is conveyed to an aromatizer (see below).

### 9. MEASURING-OUT 3

The measuring-out step 3 allows to have the exact quantity of (type 2) oil to be distributed evenly on the surface of the dried snack.

The quantity of (type 2) oil, for example colza oil, must be perfectly determined because it must perfectly fulfill two functions:
a) complete the nutrient supply of snacks according to the specifications stated in the labeling re-establishing the exact rate of fatty acids ω6/ω3;
b) forming a support on the surface of the snack to which the other ingredients in form of powders adhere.

Indicatively, the quantity of (type 2) oil which is added at this step ranges from 15% to 40% of the total mass.

The vegetable (type 2) oil, as we have said for example colza oil, can be advantageously, but not necessarily, an oil which has quite a low content of ω3, but that does not show a strong fish smell or other unpleasant odour. The addition of vegetable oil, however, allows to reach the desired final values of ω3 on the finished product.

The content in weight of ω3 preferably ranges from 1% to 30% of the finished product.

The surface of the product on which the vegetable oil is sprayed becomes sticky, and this causes the aforesaid flavourings in the form of powders to better adhere on the whole surface of the snack.

### 10. MEASURING-OUT 4

In this step, the exact quantity of ingredient characterizing the taste of the snack is established.

### 11. AROMATIZATION

To accomplish the aromatization step an aromatizer is used which comprises a rotatable cylinder within which the still hot product transits with a circular motion so as to come into contact throughout its surface with vegetable oil (type 2) and flavourings in the form of powders.

### 12. COOLING

When the aromatization step is over the snack is cooled by way of a long conveyor belt provided with fans on the upper part blowing cool air on the surface of the product in transit; at this point the product is ready to be packaged.

The cooling allows the product to enter in the package at room temperature thus avoiding to give rise to condensation phenomena and consequently becoming moldy.

The feeder comprises a loading hopper that directly receives the finished product from the cooler and an electromagnetic vibrating plane, which, in a uniform, rapid and continuous way, forwards the snack on the bucket elevator.

### 13. WEIGHING

The product to be packaged is weighed by a multiple scale.

The main purpose of this production step is to ensure the proper product weight within each package in respect to the "nominal weight" declared on the package; the correct weight of the package is guaranteed by the single or cumulative weight of one or more previously calibrated weighing cells.

A loading hopper (feeder) directly receives the finished product from the cooler, and, thanks to an electromagnetic vibrating plane, enters the snack on the bucket elevator in a uniform and continuous way.

The product is transported by the bucket elevator inside a feeding funnel, subsequently is discharged and distributed on linear feeding plates with the help of the said feeding funnel.

The product is distributed uniformly in each linear feeding plate and is accumulated in the feeding cell. When the weighing cell completes the previous weighing and empties, the product from the feeding cell flows in the weighing cell to be weighed again.

### 14. PACKAGING

The final package is formed in a vertical packaging machine; in this step there is, therefore, the filling of the package with the product, the welding of the package and printing on the same package of the manufacture date of and of the lot number.

The control of the packaging program takes place thanks to the touch screen of the PLC capable of displaying all parameters regarding the state and operation of the machine.

A photoelectric cell guides the path of the film in a delicate and precise way so that the length of the packet previously determined is sufficient to contain the quantity of desired product.

The material of the package will have the inner part metallized so as to ensure for all the shelf-life of the product (six months) all the nutritional organoleptic characteristics of the product itself.

During the film slipping towards the forming tube a pneumatic stamp will affix on the film itself, the lot number and the expiry date.

Once the package is filled, the upper gripper welds the ends of the package.

The packaging must take place within a few hours after production so as to limit the following negative effects:
1. increase in the water content resulting in loss of crispiness;
2. fat oxidation and rancidity thereof resulting in decay of taste;
3. loss of vitamins;
4. low resistance to breakage as a result of which there is a risk of obtaining a product aesthetically undesirable;
5. loss of aromas from the flavoured product.

### 15. WEIGHT CONTROL

In this step is verified that the weight obtained in the weighing step is within the limits established by binding legislation.

### 16. CHECKING METALS PRESENCE

In this step are reported and removed the packages contaminated with metal material.

### 17. BOXING

In this step the product already inside the primary packing (film) is stored within a secondary packing (cardboard). This operation is of significant importance in particular when transparent films are used as secondary packing as in this case the cardboard, as well as having a function of mechanical protection for the product, would protect it from direct sunlight responsible for the chemical-organoleptic degradation of the product.

### 18. PALLETIZING

This processing step, called "palletizing", consists of arranging the finished product boxes above a pallet according to a predefined logic that ensures its stability during handling and transportation up to the final consumer.

At the end of the palletizing, boxes are wrapped by a polypropylene stretchable film able to ensure further stability to the boxes and to protect them from dust.

### 19. STORAGE OF FINISHED PRODUCT

In this step, the positioning and the permanence of the product in stock until distribution take place.

Temperature and humidity should be monitored in such a way so as not to exceed the ranges of recommended values.

The conception of this process for the creation of an innovative snack was necessary because it is important that also in discretionary products, such as normal snacks, a maximum effort is made to offer consumers a balanced final offer respectful of the best nutrients scientifically consolidated.

The technological innovation of the present product line lies, in fact, in having found a solution that can enrich a product with normal additives such as salty snacks with nutritional compounds essential to the body as Omega 3 fatty acids, while leaving unchanged the aroma and tantalizing taste that characterize this type of product.

Probably the fact that the (type 1) oil inserted in the measuring-out step 1 doesn't produce the fishy odour is due to the heat generated by the pressure of the extruder, this causes that only fatty acids bearing fish flavour are denatured, while leaving the ω3 unchanged.

Basically in the present invention a method is described and claimed for the preparation of solid food products, in particular of salty snacks, or pasta.

The present method comprises the following steps:
1. Mixing of flour and water;
2. Formation of the dough;
3. Extrusion of the dough;
4. Drawing of the dough;
5. Drying;
6. Measuring-out flavouring additives;
7. Cooling;
8. Weighing;
9. Packaging;
10. Weight control;
11. Checking metals presence
12. Boxing
13. Palletizing, and
14. Storage of the finished product.

The present method is characterized in that the mixing step (1) of flour and water is preceded by a further step of measuring-out and pre-blending a portion of flour with an oil rich in ω3, such as linseed oil, in a percentage ranging from 1% to 40% of the quantity of flour used in this further step of measuring-out and pre-blending.

Furthermore, part of the present invention is also a plant for the preparation of solid food products, in particular of salty snacks, or pasta.

The plant comprises the following equipment:
1. At least one device for mixing flour and water;
2. At least one device for forming a dough;
3. At least one device for the extrusion of the dough;
4. At least one device for drawing the extruded dough;
5. At least one device for drying the dough;
6. At least one device for measuring-out the flavouring additives;
7. At least one cooling device;
8. At least one weighing device;
9. At least one packaging device;
10. At least one weight control device;
11. At least one device for checking metals presence;
12. At least one boxing device;
13. At least one palletizing device; and
14. At least a device for the storage of the finished product.

The plant is characterized in that it comprises, moreover, a further measuring-out and a pre-blending device of a portion of flour with an oil rich in ω3 preferably ranging from 1% to 40% of the mixed mass.

The snacks of this innovative line will seem like, then, in fact, the classic salty snacks already on the market, but without being rich in saturated fatty acids or harmful to health but actually bearers of ω3 and therefore useful for our well-being.

The extrusion device is provided with a member, set by the operator, to regulate the extrusion temperature in order to eliminate the unpleasant odour due to the added product. This temperature regulation member constitutes one of the main innovative features of the method and the plant object of the invention, since only through this member the unpleasant odour can be reduced to zero without altering the basic organoleptic properties to obtain a product containing Omega 3.

The contribution of important quantity of ω3 will allow, also, to rebalance the ratio ω6/ω3; in fact that ratio ω6/ω3, as widely known to nutritionists, is normally imbalanced in the human feeding in most countries in favour of the first.

Currently we have the following relations:
- USA: ω6/ω3 = 50
- ITALY: ω6/ω3 = 10-15

While the current nutritional objective is to reach a ratio value of ω6/ω3 ≤ 5.

Note also that our diet normally covers only 33% of our recommended needs in ω3 (0.7 g/day versus the recommended quantity of 2g/day), for this purpose, especially in the age of growth, it is essential that the individual ingests some ω3 that is normally contained in nature only in some vegetable oils and fish.

In the present case, therefore, the snack enriched with ω3 will have all the requirements to be inserted in the new generation of so-called "functional foods", i.e. habitually consumed food products as support not only to nutrition, but also to human health, in this case in fact a bag of 70 g of snacks obtained by way of the method of the present invention fulfills the daily requirement of this food in full compliance with European policies in the field of public health (2.1 g/day).

The snacks obtained according to the principles of the present method, having to be presented to a young target, however, will be characterized by organoleptic properties identical to those for the products already on the market and such as to satisfy this class of consumers.

In summary, then, the new snacks, in appearance and flavour and also for the type of package, will be very similar to snacks currently on the market, without presenting, however, some defects recognized by all experts in this field, defects due essentially to an excess of hydrogenated (or saturated) fat responsible of the aforementioned nutritional imbalance; there will be, also, even an enrichment of the daily diet of essential elements for our body with ω3 that are currently poorly used in the food industry for their distinctive "fish flavour" that is not very palatable to the average consumer.

The new snacks, on the other hand, while making macro and micronutrients useful for the well-being (iodine, ω3), precisely because of the characteristic of maintaining unaltered the appearance and the organoleptic qualities of the traditional snack will not be associated with any of the functional foods or food supplements currently available on the market.

In the step that precedes the mixing step (1) it is possible to use instead or in combination with linseed oil also gluten free vegetable flours containing Omega 3 as for example the linseed flour. In case of use of gluten free vegetable flours containing Omega 3, the percentage of the quantity of said flour ranges from 5% to 30% of the quantity of the kneaded mass. Of course a mixture of linseed oil and gluten free vegetable flours containing Omega 3 can be used. The measuring-out of the vegetable oil (type 1), can also be performed immediately before the extrusion step. Finally it should be emphasized that instead of the corn flour any vegetable flour, such as rice flour, can be used.

## Claims

1. A method for the preparation of solid food products, in particular snacks or pasta; the method comprising the following steps:
1. mixing of flour and water;
2. formation of the dough;
3. extrusion of the dough;
4. drawing of the dough, and
5. drying;
**wherein,** previously to said extrusion step (3), a further step for measuring-out and pre-blending a portion of flour with a mixture containing Omega 3, such as linseed oil or gluten-free vegetable flour containing Omega 3, in a percentage ranging from 1% to 40% of the quantity of flour used in this measuring-out step, is envisaged;
**and wherein** said measuring-out step takes place before said mixing step (1), and immediately before said extrusion step (3).

2. The method, according to claim 1, wherein in said extrusion step (3) the temperature and the pressing of the dough are adjusted as a function of parameters of said mixture containing Omega 3.

3. The method, according to any preceding claims, wherein in said step (1) a quantity of water ranging from 2% to 5% of the quantity of flour to obtain the dough desired, is added.

4. The method, as claimed in claim 3, wherein the dough of step (1) comprises a pre-blend, water and an additional quantity of flour.

5. The method, as claimed in claim 3, wherein, after the drying step (5), there is a step of measuring-out a certain quantity of (type 2) oil, for example colza oil, which determines the exact ratio of fatty acids (ω6/ω3).

6. The method, as claimed in claim 5, wherein the quantity of (type 2) oil that is measured out ranges between 15% to 40% of the total mass.

7. A plant for the preparation of solid food products, especially snacks or pasta;
the plant comprising the following equipment:
1. at least one device for mixing flour and water;
2. at least one device for forming the dough;
3. at least one device for the extrusion of the dough;
4. at least one device for drawing the extruded dough;
5. at least one device for drying the dough;
plant **characterized in that** it comprises, furthermore, means for measuring-out and pre-blending a portion of flour and a mixture containing Omega 3, such as linseed oil or gluten-free vegetable flour containing Omega 3, in a percentage ranging from 1% to 40% of the quantity of flour used in this measuring-out step.

8. A solid food product, in particular a snack or pasta product, obtained by the process claimed in any one of claims 1 to 6.

## Patentansprüche

1. Verfahren zur Herstellung von festen Nahrungsmitteln, insbesondere Snacks oder Pasta; das Verfahren die folgenden Schritte umfassend:
1. Mixen von Mehl und Wasser;
2. Formen des Teigs;
3. Extrudieren des Teigs;
4. Dehnen des Teigs, und
5. trocknen;
**wobei,** vor dem genannten Extrusionsschritt (3), ein weiterer Schritt zum Ausmessen und Vor-Vermischen einer Portion Mehl mit einer Omega 3 enthaltenden Mischung, so wie Leinöl oder glutenfreies pflanzliches Mehl das Omega 3 enthält, in einem Prozentsatz von 1% bis 40% der Menge des im Ausmessungsschritts verwendeten Mehls vorgesehen ist;
**und wobei** der genannte Ausmessungsschritt vor dem genannten Mix-Schritt (1) stattfindet, und unmittelbar vor dem genannten Extrusionsschritt (3).

2. Verfahren nach Anspruch 1, wobei in dem genannten Extrusionsschritt (3) die Temperatur und das Pressen des Teigs als Funktion von Parametern der genannten Mischung, die Omega 3 enthält, angepasst sind.

3. Verfahren nach einem der vorherigen Ansprüche, wobei in dem genannten Schritt (1) eine Menge von Wasser von 2% bis 5% der Menge des Mehls zum Erhalten des gewünschten Teigs hinzugefügt wird.

4. Verfahren nach Anspruch 3, wobei der Teig von Schritt (1) eine Vor-Vermischung, Wasser und eine zusätzliche Menge von Mehl beinhaltet.

5. Verfahren nach Anspruch 3, wobei nach dem Trocknungsschritt (5) ein Schritt des Ausmessens einer bestimmten Menge von (Typ 2) Öl, zum Beispiel Rapsöl, vorgesehen ist, wodurch das genaue Verhältnis von Fettsäuren (ω6/ ω3) bestimmt wird.

6. Verfahren nach Anspruch 5, wobei die Menge des (Typ 2) Öls das ausgemessen wird sich zwischen 15% bis 40% der gesamten Masse bewegt.

7. Eine Anlage zur Herstellung von festen Nahrungsmitteln, insbesondere Snacks oder Pasta; wobei die Anlage die folgende Betriebseinrichtung umfasst:
1. mindestens eine Vorrichtung zum Mixen von Mehl und Wasser;
2. mindestens eine Vorrichtung zum Formen des Teigs;
3. mindestens eine Vorrichtung zum Extrudieren des Teigs;
4. mindestens eine Vorrichtung zum Dehnen des extrudierten Teigs;
5. mindestens eine Vorrichtung zum Trocknen des Teigs;
die Anlage **dadurch gekennzeichnet, dass** sie außerdem Mittel umfasst zum Ausmessen und Vor-Vermischen einer Portion Mehl und einer Mischung die Omega 3 enthält, so wie Leinöl oder glutenfreies pflanzliches Mehl das Omega 3 enthält, in einem Prozentsatz von 1% bis 40% der Menge des im Ausmessungsschritts verwendeten Mehls.

8. Ein festes Nahrungsmittel, insbesondere ein Snack oder Pasta Produkt, erhalten durch das in einem der Ansprüche 1 bis 6 beanspruchten Verfahren.

## Revendications

1. Procédé pour la préparation de produits alimentaires solides, en particulier d'en-cas ou de pâtes, ledit procédé comprenant les étapes suivantes :
1. mélange de farine et d'eau,
2. formation de la pâte,
3. extrusion de la pâte,
4. étirage de la pâte, et
5. séchage,
**caractérisé en ce que**, avant ladite étape d'extrusion (3), une étape supplémentaire pour mesurer et mélanger au préalable une partie de la farine avec un mélange contenant des oméga-3, tel que de l'huile de lin ou de la farine végétale sans gluten contenant des oméga-3, dans un pourcentage allant de 1 % à 40 % de la quantité de farine utilisée à cette étape de mesure, est envisagée,
et **en ce que** ladite étape de mesure a lieu avant ladite étape de mélange (1), et immédiatement avant ladite étape d'extrusion (3).

2. Procédé selon la revendication 1, **caractérisé en ce que**, à ladite étape d'extrusion (3), la température et la pression de la pâte sont ajustées en fonction des paramètres dudit mélange contenant des oméga-3.

3. Procédé selon l'une quelconque des revendications précédentes, **caractérisé en ce que**, à ladite étape (1), une quantité d'eau allant de 2 % à 5 % de la quantité de farine pour obtenir la pâte souhaitée est ajoutée.

4. Procédé selon la revendication 3, **caractérisé en ce que** la pâte de l'étape (1) comprend un prémélange, de l'eau et une quantité supplémentaire de farine.

5. Procédé selon la revendication 3, **caractérisé en ce que**, après l'étape de séchage (5), il y a une étape de mesure d'une certaine quantité d'huile (de type 2), par exemple d'huile de colza, qui détermine le rapport exact d'acides gras (ω6/ω3).

6. Procédé selon la revendication 5, **caractérisé en ce que** la quantité d'huile (de type 2) qui est mesurée va de 15 % à 40 % de la masse totale.

7. Installation pour la préparation de produits alimentaires solides, particulièrement d'en-cas ou de pâtes, ladite installation comprenant l'équipement suivant :
1. au moins un dispositif pour mélanger de la farine et de l'eau,
2. au moins un dispositif pour former la pâte,
3. au moins un dispositif pour l'extrusion de la pâte,
4. au moins un dispositif pour étirer la pâte extrudée,
5. au moins un dispositif pour sécher la pâte,
l'installation étant **caractérisée en ce qu'**elle comprend, en outre, des moyens pour mesurer et mélanger au préalable une partie de la farine et un mélange contenant des oméga-3, tel que de l'huile de lin ou de la farine végétale sans gluten contenant des oméga-3, dans un pourcentage allant de 1 % à 40 % de la quantité de farine utilisée à cette étape de mesure.

8. Produit alimentaire solide, en particulier un en-cas ou des pâtes, obtenu par le procédé selon l'une quelconque des revendications 1 à 6.
